(19) Europäisches Patentamt
European Patent Office
Office européen des brevets

(11) EP 0 859 417 A2

(12) **EUROPEAN PATENT APPLICATION**

(43) Date of publication:
19.08.1998 Bulletin 1998/34

(51) Int. Cl.6: **H01M 2/16**, H01M 10/40

(21) Application number: 98102294.0

(22) Date of filing: 10.02.1998

(84) Designated Contracting States:
AT BE CH DE DK ES FI FR GB GR IE IT LI LU MC NL PT SE
Designated Extension States:
AL LT LV MK RO SI

(30) Priority: 12.02.1997 JP 27924/97
10.11.1997 JP 307076/97

(71) Applicant:
**MITSUBISHI DENKI KABUSHIKI KAISHA**
**Tokyo 100 (JP)**

(72) Inventors:
• **Murai, Michio**
**Chiyoda-ku, Tokyo 100 (JP)**
• **Inuzuka, Takayuki**
**Chiyoda-ku, Tokyo 100 (JP)**
• **Yoshida, Yasuhiro**
**Chiyoda-ku, Tokyo 100 (JP)**
• **Hamano, Kouji**
**Chiyoda-ku, Tokyo 100 (JP)**
• **Shiota, Hisashi**
**Chiyoda-ku, Tokyo 100 (JP)**
• **Aihara, Shigeru**
**Chiyoda-ku, Tokyo 100 (JP)**
• **Shiraga, Syo**
**Chiyoda-ku, Tokyo 100 (JP)**

(74) Representative:
**Bohnenberger, Johannes, Dr. et al**
**Meissner, Bolte & Partner**
**Widenmayerstrasse 48**
**80538 München (DE)**

(54) **Adhesive for battery, battery using the same and method of fabricating a battery using the same**

(57) A lithium ion secondary battery has a positive electrode (1), a negative electrode (4), and a separator (7) holding an electrolytic solution. An adhesive (8) containing an organic vinyl compound having at least two vinyl groups per molecule is applied between the positive electrode (1) and the separator (7) and between the negative electrode (4) and the separator (7) and cured by reaction to join them.

*FIG. 1*

EP 0 859 417 A2

**Description**

Background of the Invention

1.Field of the Invention:

This invention relates to an adhesive for secondary battery used in portable electronic equipment and the like. More particularly, it relates to an adhesive that makes it feasible to provide secondary batteries of arbitrary shape, for example, thin film batteries.

2.Description of the Related Art:

There has been an eager demand for reduction in size and weight of portable electronic equipment, and its realization relies heavily on improvement of the battery used therein in terms of performance and size. To meet the demand, development and improvement of a variety of batteries have been proceeding. Characteristics required of batteries include a high voltage, a large energy density, reliability, and freedom of shape design. Lithium ion batteries are secondary batteries that are the most expected of so far developed batteries to achieve a high voltage and a large energy density and will undergo successive improvements.

The main part of a lithium ion secondary battery comprises a positive electrode, a negative electrode, and an ionically conducting layer interposed between the electrodes. The lithium ion secondary batteries that have been put to practical use generally employ a positive electrode plate prepared by applying a powdered active material, such as a lithium-cobalt complex oxide, to a current collector, a negative electrode plate prepared by applying a powdered carbonaceous active material to a current collector, and an ionically conducting layer made of a porous film of polyethylene, polypropylene, etc. filled with a nonagueous electrolytic solution.

In conventional lithium ion batteries, in order to maintain electrical connections (planar contact) between a positive electrode and a separator and between a negative electrode and a separator, it has been necessary to externally apply pressure by means of a rigid battery case made of metal, etc. as disclosed in JP-A-8-83608 (the term "JP-A" as used herein means an "unexamined published Japanese patent application").

JP-A-5-159802 discloses a solid secondary battery, in which an ionically conducting solid electrolyte layer and an active material layer are integrally adhered by heating a thermoplastic resin binder. According to this technique, the electrodes and a solid electrolyte layer are firmly adhered to maintain electrical connections so that application of external pressure is not needed. With reference to thin film batteries, as described in U.S. Patent 5,460,904,those using polymer gel as an ion conductor are known. Thin film batteries of this type are characterized in that a binder comprising polyvinylidene fluoride is used as polymer gel to join a positive electrode, a separator, and a negative electrode into an integral body.

Thus a sufficient electrical contact between an electrode and an ionically conducting layer in conventional batteries has been made by using a rigid case made of metal, etc. so as to impose pressure inside. However, such a case occupies a large proportion in the weight and volume of a battery, which is disadvantageous for manufacturing batteries having a large energy density.

In those batteries in which electrodes are joined to a solid electrolyte layer via a binder, because the surfaces of the electrolyte layer are covered with a solid binder, the ion conductivity is reduced as compared with the type of batteries that uses a liquid electrolyte and maintains electrical connections by pressure application by means of a battery case. Besides, no binder equal to a liquid electrolyte in ion conductivity having been developed yet, it has been impossible to obtain batteries whose characteristics are not inferior to those of batteries using a liquid electrolyte.

Additionally, in the thin film batteries using polyvinylidene fluoride as polymer gel, the adhesiveness of polyvinylidene fluoride is affected by temperature because of its thermoplasticity. In particular, the adhesion is likely to reduce in high temperatures.

Summary of the Invention

Accordingly, an object of the present invention is to provide an adhesive having a satisfactory ion conductivity which is to be used for adhering an electrode and an electrolyte layer (i.e., a separator) thereby to provide a battery which maintains satisfactory electrical contacts between an electrode and an electrolyte layer over a broad temperature range without using a rigid battery case that has been necessary for pressure application.

Another object of the present invention is to use such an adhesive to provide a battery which can have a reduced thickness and a reduced weight and yet exhibits excellent charge and discharge characteristics with high reliability.

The present invention provides, in its broadest scope, an adhesive for batteries used for adhering an active material layer adhered to a current collector to a separator, which contains at least one organic vinyl compound having at least two vinyl groups per molecule.

A first aspect of the adhesive for battery of the present invention is an adhesive, which contains at least one organic vinyl compound having at least two vinyl groups per molecule.

A second aspect of the adhesive for battery is an adhesive according to an first aspect, wherein said organic vinyl compound having at least two vinyl groups per molecule is selected from the group consisting of an acrylic ester, a polyacrylic ester, a methacrylic ester, and a polymethacrylic ester.

A third aspect of the adhesive for battery is an adhesive according to an first aspect, which further contains at least one organic vinyl compound having one vinyl group per molecule.

A fourth aspect of the adhesive for battery is an adhesive according to an first aspect, which further contains a catalyst.

A fifth aspect of the adhesive for battery is an adhesive according to an first aspect, which further contains a lithium salt and an aprotic organic solvent.

A sixth aspect of the adhesive for battery is an adhesive according to an first aspect, wherein said adhesive contains said organic vinyl compound having at least two vinyl groups per molecule within a range between 5 % by weight to 100% by weight.

A seventh aspect of the adhesive for battery is an adhesive according to an sixth aspect, wherein said adhesive contains said organic vinyl compound having at least two vinyl groups per molecule within a range between 5 % by weight to 50% by weight.

An eighth aspect of the battery of the present invention is a battery, which comprises an electrode laminate having:

a positive electrode;
a negative electrode;
a separator which is arranged between said positive electrode and negative electrode and keeps an electrolytic solution; and
an adhesive resin layer which bonds said positive electrode and said negative electrode to said separator,
wherein said adhesive resin layer contains at least one organic vinyl compound having at least two vinyl groups per molecule.

A ninth aspect of the battery is a battery according to the eighth aspect, wherein each of said positive electrode and negative electrode comprises an electrode current collector and an electrode active material layer formed on the electrode current collector, and the adhesive strength between each active material layer and the separator is equal to or larger than that between the active material layer and the current collector.

A tenth aspect of the battery is a battery according to the eighth aspect, wherein said battery has a plurality of said electrode laminates.

An eleventh aspect of the battery is a battery according to the tenth aspect, wherein said electrode laminate is made up of a plurality of cut sheets of the separator in between which a cut sheet of the positive electrode and a cut sheet of the negative electrode are alternately interposed.

A twelfth aspect of the battery is a battery according to the tenth aspect, wherein said electrode laminates are made up of a rolled pair of separators in between which the positive electrode and the negative electrode are alternately interposed.

A thirteenth aspect of the battery is a battery according to the tenth aspect, wherein said electrode laminates are made up of a folded pair of separators in between which the positive electrode and the negative electrode are alternately interposed.

A fourteenth aspect of the method of fabricating a battery is a method of the present invention, which comprises the steps of:

coating an adhesive contains at least one organic vinyl compound having at least two vinyl groups per molecule on at least one of a separator and each of negative and positive electrodes to be bonded each other;
laminating a positive electrode and a negative electrode on the both surfaces of the separator respectively to form a electrode laminate;
curing the adhesive by heating the electrode laminate.

A fifteenth aspect of the method of fabricating a battery is a method of the present invention, wherein adhesive further contains a catalyst, a lithium salt and an aprotic organic solvent.

A sixteenth aspect of the method of fabricating battery is a method according to the fifteenth aspect, wherein the step of curing comprises steps of:

crosslinking the adhesive with evaporating an electrolytic solution component from the adhesive.

A seventeenth aspect of the method of fabricating battery is a method according to the fifteenth aspect, wherein said organic vinyl compound having at least two vinyl groups per molecule is selected from the group consisting of an acrylic ester, a polyacrylic ester, a methacrylic ester, and a polymethacrylic ester.

An eighteenth aspect of the method of fabricating battery is a method according to the seventeenth aspect, wherein said adhesive contains more than 50% by weight of electrolytic solution component.

A nineteenth aspect of the method of fabricating battery is a method according to the seventeenth aspect, wherein said adhesive contains more than 70% by weight of electrolytic solution component.

A twentieth aspect of the method of fabricating battery is a method according to the eighteenth aspect, wherein the step of curing comprises a step of heating the laminate at a temperature in a range of 80 °C for 1 hour.

In a preferred embodiment of the adhesive, the organic vinyl compound having at least two vinyl groups per molecule is selected from the group consisting of an acrylic ester, a polyacrylic ester, a methacrylic ester, and a polymethacrylic ester.

In another preferred embodiment of the adhesive, the adhesive further contains at least one organic vinyl compound having one vinyl group per molecule.

In still another preferred embodiment of the adhesive, the adhesive further contains a catalyst for polymerization reaction.

In yet another preferred embodiment of the adhesive, the adhesive further contains a lithium salt and an aprotic organic solvent.

The present invention also provides a battery having an electrode laminate composed of a pair of facing positive and negative electrodes made up of respective active material layers adhered to respective current collectors with a separator therebetween, wherein each active material layer and the separator are adhered with the adhesive according to the present invention.

In a preferred embodiment of the battery, the adhesive strength between each active material layer and the separator is equal to or larger than that between the active material layer and the current collector.

In another preferred embodiment of the battery, the battery has a plurality of the electrode laminates.

In one embodiment of the battery having a plurality of the electrode laminates, the electrode laminates are made up of a plurality of cut sheets of the separator in between which a cut sheet of the positive electrode and a cut sheet of the negative electrode are alternately interposed.

In another embodiment of the battery having a plurality of the electrode laminates, the electrode laminates are made up of a rolled pair of separators in between which the positive electrode and the negative electrode are alternately interposed.

In still another embodiment of the battery having a plurality of the electrode laminates, the electrode laminates are made up of a folded pair of separators in between which the positive electrode and the negative electrode are alternately interposed.

Brief Description of the Drawings:

Fig. 1 is a schematic cross section of the main part of a battery according to one embodiment of the present invention.

Fig. 2 is a schematic cross section of the main part of a battery according to another embodiment of the present invention.

Fig. 3 is a schematic cross section of the main part of a battery according to still another embodiment of the present invention.

Fig. 4 is a schematic cross section of the main part of a battery according to yet another embodiment of the present invention.

Description of the preferred Embodiments

The inventors of the present invention have extensively studied a method for adhering an electrolyte layer (separator) and an electrode plate and reached the present invention as a result.

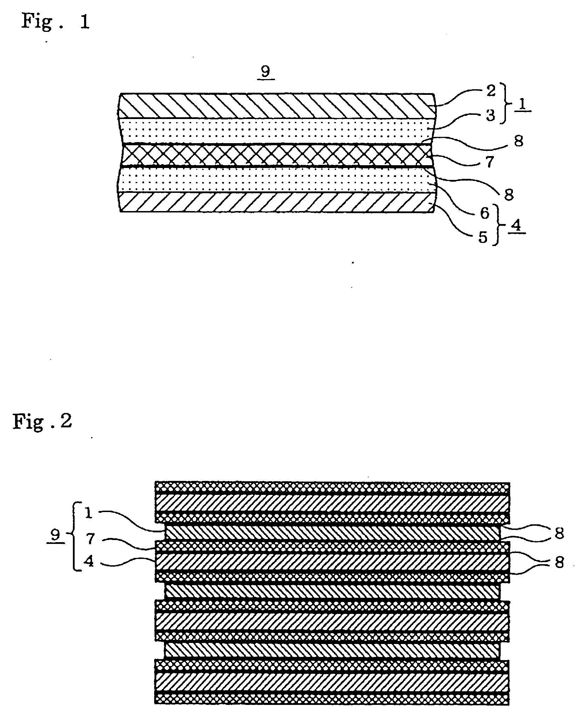

The present invention relates to an adhesive used in the production of a battery having a basic structure shown in Fig. 1. In Fig. 1, a positive electrode 1 composed of a positive electrode active material layer 3 adhered to a positive electrode current collector 2 and a negative electrode 4 composed of a negative electrode active material layer 6 adhered to a negative electrode current collector 5 are joined together with a separator 7 holding an electrolytic solution interposed therebetween. The adhesive 8 is used to join the positive electrode 1 to the separator 7 and the negative electrode 4 to the separator 7.

The characteristic of the present invention resides in the composition of the adhesive 8 adhering the electrodes 1 and 4 to the separator 7. The adhesive 8 contains an organic vinyl compound having at least two vinyl groups per molecule.

The inventors have studied on how to reduce the thickness of a secondary battery while securing reliability and high charge and discharge efficiency over a broad temperature range. As a result, they have found that use of an organic vinyl compound having at least two vinyl groups per molecule as an adhesive 8 makes it feasible to produce a secondary battery that can take an arbitrary shape, such as a thin shape, and is yet highly reliable and exhibits high charge and discharge efficiency over a broad temperature range. The present invention has been completed based on this finding.

According to the inventors' study, the organic vinyl compound having at least two vinyl groups per molecule as an adhesive 8 undergoes crosslinking and polymerization upon heating to form net-shaped structure. Therefore adhesive 8 become porous and have good adhesion and good heat resistance. As above the adhesive 8 manifest adhesive strength enough to produce an integral battery over a wide range of temperature. It is considered that the adhesive 8 contains a component which gels on contact with an electrolytic solution, and the gelled component holds the electrolytic solution to secure ion conductivity.

The organic vinyl compound having at least two vinyl groups in the molecule thereof includes divinylbenzene, ethylene glycol dimethacrylate, triethylene glycol dimethacrylate, 1,3-butylene glycol dimethacrylate, 1,6-hexanediol dimethacrylate, polyethylene glycol dimethacrylate, polybutylene glycol dimethacrylate, and trimethylolpropane trimethacrylate, and mixtures of two or more thereof.

Of these vinyl compounds, acrylic esters and methacrylic esters are preferred for their availability and ease of handling.

The organic vinyl compound having at least two vinyl groups per molecule can be used in combination with an organic vinyl compound having one vinyl group per molecule. In this case, the two vinyl compounds are copolymerized on heating to manifest adhesion.

The organic vinyl compound having one vinyl group per molecule includes methyl methacrylate, ethyl methacrylate, n-butyl methacrylate, isobutyl methacrylate, t-butyl methacrylate, 2-ethylhexyl methacrylate, cyclohexyl methacrylate, benzyl methacrylate, isobornyl methacrylate, tetrahydrofurfuryl methacrylate, styrene, vinyl chloride, and acrylonitrile, mixture of two or more of these compounds, and polymers comprising these compounds.

If desired, a catalyst for polymerization can be added to the organic vinyl compound to accelerate the thermal crosslinking polymerization. Suitable catalysts include azobisisobutyronitrile, benzoyl peroxide, and lauryl peroxide.

It has turned out that the charge and discharge characteristics can be improved by adding a lithium salt and an aprotic organic solvent to the adhesive of the present invention. Although the reason has not necessarily been elucidated, it seems that the adhesive gains ion conductivity in the presence of a lithium salt and an aprotic organic solvent. Further according to the presence of a lithium salt, it is easy to be performed crosslinking polymerization. This is owing that the lithium salt acts as catalyst for polymerization. Therefore heat durability and adhesive strength are improved.

Examples of useful lithium salts are $LiClO_4$, $LiBF_4$, $LiAsF_6$, $LiCF_3SO_3$, $LiPF_6$, LiI, LiBr, LiSCN, $Li_2B_{10}Cl_{10}$, and $LiCF_3CO_2$.

Examples of suitable aprotic organic solvents are propylene carbonate, $\gamma$-butyrolactone, ethylene carbonate, tetrahydrofuran, 2-tetrahydrofuran, 1,3-dioxolane, 4,4-dimethyl-1,3-dioxolane, diethyl carbonate, dimethyl carbonate, sulfolane, 3-methylsulfolane, t-butyl ether, isobutyl ether, 1,2-dimethoxyethane, and 1,2-ethoxymethoxyethane.

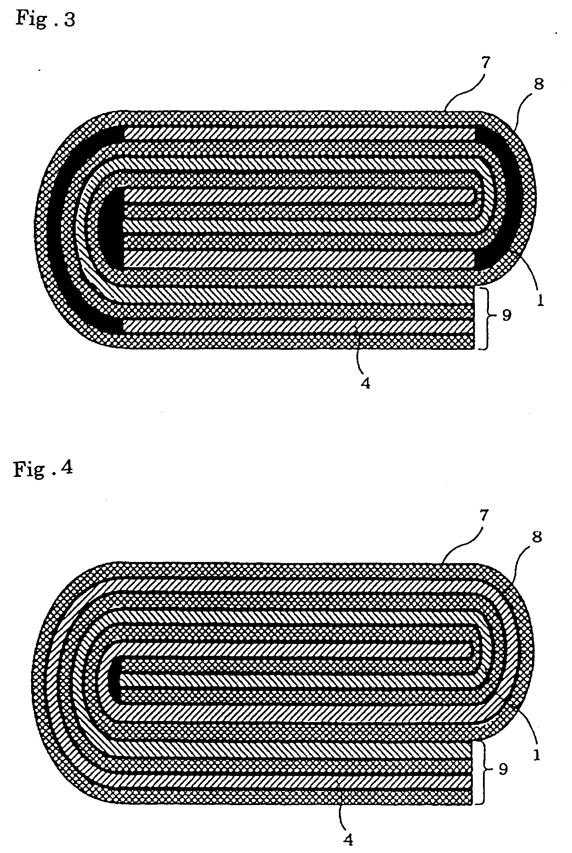

The battery structure to which the present invention is applicable includes not only the structure having a single electrode laminate shown in Fig. 1 which is composed of a pair of electrodes are stuck to a separator but multilayer structures, such as a tabular multi-laminate structure shown in Fig. 2 which is composed of a plurality of electrode laminates and tabular roll type structures shown in Figs. 3 and 4 in which an electrode laminate is rolled up into an oblong ellipsoid. Adhesive strength and large ion conductivity being secured, compact multilayer structure batteries having high performance and a large battery capacity can be obtained without requiring a rigid battery case.

The present invention will now be illustrated in greater detail with reference to embodiments and Comparative Examples, but it should be understood that the present invention is not deemed to be limited thereto. Unless otherwise noted, all the percents and parts are by weight. In Embodiments 1 to 24 and Comparative Examples 1 to 3 batteries having the basic structure shown in Fig. 1 were prepared, and the adhesive strength and charge and discharge characteristics of the resulting batteries were measured in accordance with the following methods. The results obtained are shown in Table1,2 together with the composition of the adhesive used.

Adhesive Strength:

A positive electrode 1, a negative electrode 4, and a separator 4 were adhered altogether with an adhesive 8 to prepare a test piece of 10 mm in width, 100 mm in length, and 0.2 mm in thickness. The peel strength of the test piece was measured with UTMII-20 manufactured by Toyo Baldwin at a cross head speed of 4 mm/min at 25°C and 70°C.

## Charge and Discharge Characteristics:

Charge and discharge characteristics were measured in accordance with the method described in Denchi Binran Henshu linkai (ed.), <u>Denchi Binran</u>, Maruzen (1990) under the following conditions.

Charge: constant current and constant voltage Final charge voltage: 4.2 V
Discharge: constant current (33.3 mA) Final discharge voltage: 2.5 V

Charge and discharge efficiency = quantity of discharged electricity/quantity of charged electricity

## EMBODIMENTS 1 TO 4

## Preparation of Positive Electrode

A positive electrode active material paste comprising 87% by weight of $LiCoO_2$, 8% by weight of graphite powder, and 5% by weight of polyvinylidene fluoride (hereinafter abbreviated as PVDF) was applied to a temporary substrate with a doctor blade to a thickness of 300 $\mu$m. A 30 $\mu$m thick aluminum net as a current collector 2 was put thereon, and the paste was applied to the current collector 2 with a doctor blade to a thickness of 300 $\mu$m. The laminate was allowed to stand in a drier at 60°C for 60 minutes to prepare a half-dried laminate. The laminate was rolled to a thickness of 400 $\mu$m to prepare a positive electrode 1 composed of the current collector 2 having positive electrode active material layers 3. After immersing the positive electrode 1 in an electrolytic solution, the adhesive strength between the active material layer 3 and the current collector 2 was measured. The adhesive strength was 20 gf/cm at 25°C and 15 gf/cm at 70°C.

## Preparation of Negative Electrode

A negative electrode active material paste comprising 95% by weight of Mesophase Microbead Carbon (produced by Osaka Gas Co., Ltd.) and 5% by weight of PVDF was applied to a temporary substrate with a doctor blade to a thickness of 300 $\mu$m, and a 20 $\mu$m thick copper net as a current collector 5 was put thereon. The paste was applied to the current collector 5 with a doctor blade to a thickness of 300 $\mu$m. The laminate was allowed to stand in a drier at 60°C for 60 minutes to prepare a half-dried laminate. The laminate was rolled to a thickness of 400 $\mu$m to prepare a negative electrode 4 composed of the current collector 5 having active material layers 6. After immersing the negative electrode 4 in an electrolytic solution, the adhesive strength between the active material layer 6 and the current collector 5 was measured. The adhesive strength was 12 gf/cm at 25°C and 7 gf/cm at 70°C.

## Preparation of Adhesive

Ethylene glycol dimethacrylate (hereinafter abbreviated as EGDM) and methyl methacrylate (hereinafter abbreviated as MMA) were mixed in a ratio shown in Table1,2. One equivalent of azobisisobutyronitrile was dissolved therein per 100 equivalents of the mixture to prepare an adhesive.

## Preparation of Test Piece

The adhesive was applied to both sides of a porous polypropylene sheet (Cellguard #2400, produced by Hoechst Celanese Plastics Ltd.) as a separator 7, and the positive electrode 1 and the negative electrode 4 were stuck thereto to prepare a laminate of prescribed thickness. The laminate was hot pressed at 80°C for 2 hours to cause the adhesive to crosslink and polymerize. A test piece of prescribed size for adhesive strength test was cut out of the resulting electrode laminate.

## Preparation of Battery

The adhesive was applied to both sides of a porous polypropylene sheet (Cellguard #2400, produced by Hoechst Celanese Plastics Ltd.) cut into a 55-mm square as a separator 7, and the positive electrode 1 and the negative electrode 4 were stuck thereto to prepare a laminate of prescribed thickness. The laminate was hot pressed at 80°C for 2 hours to obtain an electrode laminate. The electrode laminate was put into an aluminum laminate film pack and impregnated with an electrolytic solution under reduced pressure. The film pack was heat-sealed to complete a film battery of 50 mm in width, 50 mm in length, and 0.4 mm in thickness.

EMBODIMENTS 5 TO 8

A battery and a test piece were prepared in the same manner as in Embodiments 1 to 4, except for using an adhesive prepared by mixing 1,6-hexanediol dimethacrylate (hereinafter abbreviated as HDDM) and MMA in a ratio shown in Table1,2 and dissolving therein one equivalent of azobisisobutyronitrile per 100 equivalents of the mixture.

EMBODIMENTS 9 TO 12

A battery and a test piece were prepared in the same manner as in Embodiments 1 to 4, except for using an adhesive prepared by mixing polyethylene glycol dimethacrylate (hereinafter abbreviated as PEGDM) and MMA in a ratio shown in Table1,2 and dissolving therein one equivalent of azobisisobutyronitrile per 100 equivalents of the mixture.

EMBODIMENTS 13 TO 16

A battery and a test piece were prepared in the same manner as in Embodiments 1 to 4, except for using an adhesive prepared by mixing trimethylolpropane trimethacrylate (hereinafter abbreviated as TMPTMA) and MMA in a ratio shown in Table1,2 and dissolving therein one equivalent of azobisisobutyronitrile per 100 equivalents of the mixture.

EMBODIMENTS 17 TO 20

A battery and a test piece were prepared in the same manner as in Embodiments 1 to 4, except for using an adhesive prepared by mixing EGDM, MMA, and an electrolytic solution ("Sol-Rite" produced by Mitsubishi Chemical Co., Ltd.; $LiPF_6$/ethylene carbonate:diethyl carbonate=1:1; 1 mol/l) in a ratio shown in Table1,2 and dissolving therein 3 equivalents of azobisisobutyronitrile per 100 equivalents of the mixture of EGDM and MMA.

EMBODIMENTS 21 TO 24

A battery and a test piece were prepared in the same manner as in Embodiments 1 to 4, except for using an adhesive prepared by mixing EGDM, MMA, an electrolytic solution ("Solight" produced by Mitsubishi Chemical Co., Ltd.; $LiPF_6$/ethylene carbonate:diethyl carbonate=1:1; 1 mol/l), and polymethyl methacrylate having an average molecular weight of 1000,000 (hereinafter abbreviated as PMMA) in a ratio shown in Table1,2 and dissolving therein 3 equivalents of azobisisobutyronitrile per 100 equivalents of the mixture of EGDM, MMA, and PMMA.

COMPARATIVE EXAMPLE 1

A battery and a test piece were prepared in the same manner as in Embodiments 1 to 4, except for using an adhesive prepared by dissolving one equivalent of azobisisobutyronitrile per 100 equivalents of MMA.

COMPARATIVE EXAMPLE 2

A battery and a test piece were prepared in the same manner as in Embodiments 1 to 4, except for using an adhesive prepared by dissolving one equivalent of azobisisobutyronitrile per 100 equivalents of styrene.

COMPARATIVE EXAMPLE 3

A battery and a test piece were prepared in the same manner as in Embodiments 1 to 4, except for using an adhesive consisting of 5 % by weight of PVDF having an average molecular weight of 180,000 and 95 % by weight of N-methyl-2-pyrrolidone (hereinafter abbreviated as NMP).

The adhesive strength of the test pieces prepared in Embodiments and Comparative Examples was measured under the above-described conditions and evaluated in three grades as follows.

Good ...       The adhesive strength is equal to or larger than that between the active material layer (3 or 6) and the current collector (2 or 5) at both 25°C and 70°C.

Medium ...   The adhesive strength is lower than that between the active material layer (3 or 6) and the current collector (2 or 5) at 25°C or 70°C.

Poor ...        The adhesive strength is lower than that between the active material layer (3 or 6) and the current collector (2 or 5) at both 25°C and 70°C.

The batteries obtained in Embodiments and Comparative Examples were repeatedly charged and discharged 100 times, and the charge and discharge characteristics were evaluated according to the following standard.

Very good ...    The charge and discharge efficiency in the 100th cycle is 90% or higher.
Good ...    The charge and discharge efficiency in the 100th cycle is 70% or higher.
Poor ...    The charge and discharge efficiency in the 100th cycle is less than 70% or unmeasurable due to delamination.

TABLE 1

| Embodiment | | Composition of Adhesive | | | | | | | Adhesive Strength | | Charge and Discharge Characteristics |
|---|---|---|---|---|---|---|---|---|---|---|---|
| | MMA | EGDM | HDDM | PEGDM | TMPTMA | ES* | PMMA | Posi /Sep | Nega /Sep | |
| Emb.1 | 75 | 25 | | | | | | good | good | good |
| Emb. 2 | 50 | 50 | | | | | | good | good | good |
| Emb. 3 | 25 | 75 | | | | | | good | good | good |
| Emb. 4 | 0 | 100 | | | | | | good | good | good |
| Emb. 5 | 75 | | 25 | | | | | good | good | good |
| Emb. 6 | 50 | | 50 | | | | | good | good | good |
| Emb. 7 | 25 | | 75 | | | | | good | good | good |
| Emb. 8 | 0 | | 100 | | | | | good | good | good |
| Emb. 9 | 75 | | | 25 | | | | good | good | good |
| Emb. 10 | 50 | | | 50 | | | | good | good | good |
| Emb. 11 | 25 | | | 75 | | | | good | good | good |
| Emb. 12 | 0 | | | 100 | | | | good | good | good |
| Emb. 13 | 75 | | | | 25 | | | good | good | good |
| Emb. 14 | 50 | | | | 50 | | | good | good | good |

EP 0 859 417 A2

TABLE 2

| | Composition of Adhesive | | | | | | | Adhesive Strength | | Charge and Discharge Characteristics |
|---|---|---|---|---|---|---|---|---|---|---|
| | MMA | EGDM | HDDM | PEGDM | TMPTMA | ES° | PMMA | Positive Electrode/Separator | Negative Electrode/Separator | |
| Emb. 15 | 25 | | | | 75 | | | good | good | good |
| Emb. 16 | 0 | | | | 100 | | | good | good | good |
| Emb. 17 | 50 | 50 | | | | 50 | | good | good | very good |
| Emb. 18 | 50 | 50 | | | | 100 | | good | good | very good |
| Emb. 19 | 50 | 50 | | | | 200 | | good | good | very good |
| Emb. 20 | 50 | 50 | | | | 300 | | good | good | very good |
| Emb. 21 | 50 | 50 | | | | 400 | 50 | good | good | very good |
| Emb. 22 | 50 | 50 | | | | 400 | 100 | good | good | very good |
| Emb. 23 | 50 | 50 | | | | 400 | 200 | good | good | very good |
| Emb. 24 | 50 | 50 | | | . | 400 | 300 | good | good | very good |
| Com.Exa. 1 | MMA | | | | | | | medium | medium | good |
| Com.Exa. 2 | styrene | | | | | | | poor | poor | poor |
| Com.Exa. 3 | PVDF | | | | | | | medium | medium | good |

Note:      Emb stands for Embodiment

.          Com.Exa. stands for Comparative Example

           Posi /Sep: stands for Positive electrode/Separator

           Nega /Sep: stands for Negative electrode/Separator

           "ES" stands for "electrolytic solution".

As is clearly shown in Table1,2, the batteries obtained in Embodiments 1 to 24 have large adhesive strength between the positive electrode 1 and the separator 7 and between the negative electrode 4 and the separator 7 and exhibit excellent charge and discharge characteristics.

EMBODIMENT 25

Positive and negative electrodes and an adhesive were prepared in the same manner as in Embodiment 1. The adhesive was applied to one side each of two separators, and the negative electrode was sandwiched in between the facing adhesive layers of the two separators. The laminate was hot pressed at 80°C for 2 hours to evaporate NMP of the adhesive.

The laminate was punched into a prescribed size. On one side of the laminate (i.e., one of the separators) was applied the adhesive, and the positive electrode punched into a prescribed size was stuck thereto to obtain an electrode laminate composed of the separator, the negative electrode, the separator, and the positive electrode in this order. Another laminate of a pair of separators having the negative electrode (punched into a prescribed size) therebetween was prepared, and the adhesive was applied to one size of the laminate. The adhesive-coated side of the laminate was stuck to the positive electrode of the above-prepared electrode laminate. The above steps were repeated to build up a battery body having a plurality of electrode laminates. The battery body was dried under pressure to obtain a tabular multi-layer structure as shown in Fig. 2.

Current collector tabs connected to the every end of the positive electrode current collectors and the negative electrode current collectors were connected by spot welding to make electrical connections in series. The battery body was put into an aluminum laminate film pack and impregnated with an electrolytic solution in the same manner as in Embodiment 1. The film pack was hot sealed to complete a battery having a multilayer structure.

Alternatively, the multilayer structure battery can be prepared by sandwiching the positive electrode in between a pair of separators via the adhesive to prepare a positive electrode laminate, applying the adhesive to one of the separators, sticking the negative electrode onto the adhesive layer, and further sticking another positive electrode laminate onto the negative electrode.

EMBODIMENT 26

Positive and negative electrodes having a band form and an adhesive were prepared in the same manner as in Embodiment 1. The adhesive was applied to one side each of two separators having a band form, and the positive electrode was sandwiched in between the adhesive layers of the two separators facing each other. The laminate was hot pressed at 80°C for 2 hours to evaporate NMP of the adhesive.

The adhesive was applied to one side of the laminate (i.e., one of the separators). One end of the adhesive-coated laminate was folded back at a prescribed length with its coated side inside, a piece of the negative electrode cut in a prescribed length was inserted into the fold, and the laminate was passed through a laminator. Subsequently, the adhesive was applied to the other side of the laminate, and another piece of the negative electrode cut in a prescribed length was stuck thereto at the position facing the negative electrode inserted into the fold. The separator/positive electrode/separator laminate was given a half turn while enveloping the negative electrode in to make an oblong ellipsoid. Another half turn was given to the laminate with a still another cut piece of the negative electrode inserted therein. These steps were repeated to roll up into a battery body having a plurality of electrode laminates. The battery body was dried under pressure to obtain a tabular roll type multi-layer structure as shown in Fig. 3.

Current collector tabs connected to the every end of the positive electrode current collectors and the negative electrode current collectors were spot welded so as to electrically connect the positive electrodes and the negative electrodes in respective series. The battery body was impregnated with an electrolytic solution and sealed into an aluminum laminate film pack in the same manner as in Embodiment 1 to complete a multilayer secondary battery.

While in the above embodiment a separator/positive electrode/separator laminate was rolled up while inserting a cut piece of the negative electrode for every half turn, the multilayer battery can also be prepared by rolling up a separator/negative electrode/separator laminate while inserting a cut piece of the positive electrode for every half turn.

Further, instead of rolling, the separator/electrode/separator laminate may be folded successively while inserting a cut piece of the counter electrode for every fold.

EMBODIMENT 27

Negative and positive electrodes of band form and an adhesive were prepared in the same manner as in Embodiment 1.

The positive electrode was arranged between a pair of separators. The negative electrode was arranged on one of the separators with a prescribed length of its starting end sticking out over the end of the separator. The inner side of the two separators and the outer side of one of the separators on which the negative electrode was put had previously been coated with the adhesive. The sticking end of the negative electrode was first passed through a laminator, and the negative electrode, the separator, the positive electrode, and the separator were then passed through the laminator to prepare a laminate of band form. The adhesive was applied to the outer side of the other separator, and the sticking end of the negative electrode was folded back and stuck to the adhesive layer. The laminate was rolled up in such a manner that the folded negative electrode might be wrapped in to make an oblong ellipsoid to form a battery body comprising a plurality of electrode laminates as shown in Fig. 4. The battery body was dried under pressure to simultaneously join the negative electrode, the separators, and the positive electrode into a tabular roll type multilayer structure.

The battery body was impregnated with an electrolytic solution and sealed into an aluminum laminate film pack in the same manner as in Embodiment 1 to complete a multilayer secondary battery.

While in the above embodiment the positive electrode of band form was arranged between a pair of separators of band form, and the negative electrode was arranged on one of the separators, the same type of a battery could be prepared by arranging the negative electrode in between the separators and the positive electrode on one of the separators.

In Embodiments 25 to 27, when the number of the electrode laminates was varied, the battery capacity increased with the number of the laminates. Effect of the Invention:

As described above, the adhesive according to the present invention, which is used for adhering an active material layer adhered to a current collector onto a separator, contains at least one organic vinyl compound having at least two vinyl groups per molecule. The adhesive applied cures through crosslinking and polymerization on heating to secure adhesion between the electrode and the separator over a broad range of temperature as well as excellent charge and discharge characteristics. Thus, the present invention makes it possible to provide batteries which can have a reduced thickness without sacrificing reliability and also exhibit practically high charge and discharge efficiency.

Where the adhesive is used in combination with a catalyst for polymerization, the thermal crosslinking and polymerization can be accelerated.

Where the adhesive further contains a lithium salt and an aprotic organic solvent, the resulting battery has improved charge and discharge characteristics.

When the adhesive of the present invention is used in the formation of an electrode laminate composed of a pair of electrodes adhered with a separator therebetween, there is provided a practically useful battery that can have a reduced thickness without sacrificing reliability and also exhibits high charge and discharge efficiency.

Where the present invention is applied to a battery having a plurality of the above-mentioned electrode laminates, the resulting battery is still compact, requiring no rigid outer case, and has high performance and a large battery capacity.

**Claims**

1. An adhesive suitable for adhering an electrode to a separator in a battery, the adhesive containing at least one organic vinyl compound having one or more vinyl groups per molecule.

2. The adhesive as claimed in Claim 1, wherein said organic vinyl compound has at least two vinyl groups per molecule and is selected from the group consisting of an acrylic ester, a polyacrylic ester, a methacrylic ester, and a polymethacrylic ester.

3. The adhesive as claimed in Claim 1 or 2, further comprising a catalyst.

4. The adhesive as claimed in Claim 2 or 3, further comprising a lithium salt and an aprotic organic solvent.

5. The adhesive as claimed in Claim 2, wherein said adhesive contains said organic vinyl compound having at least two vinyl groups per molecule in an amount in the range of 5% to 100% by weight, in particular in the range of 5% to 50% by weight.

6. A battery fabricated by using an adhesive comprising an electrode laminate having:

   a positive electrode (1);

   a negative electrode (4);

   a separator (7) arranged between said positive electrode (1) and negative electrode (4), the separator holding an electrolytic solution; and

   an adhesive resin layer (8) arranged to bond said positive electrode (1) and said negative electrode (4) to said separator (7),
   wherein said adhesive resin layer is composed of the adhesive of any one of the Claims 1 to 5.

7. The battery as claimed in Claim 6, wherein each of said positive electrode (1) and negative electrode (4) comprises an electrode current collector (2, 5) and an electrode active material layer (3, 6) formed on the electrode current collector, and
   the adhesive strength between each active material layer (3, 6) and the separator (7) is equal to or larger than that between the active material layer (3, 6) and the current collector (2, 5).

8. The battery as claimed in Claim 6 or 7, wherein said battery has a plurality of said electrode laminates.

Fig. 1

Fig. 2

Fig . 3

Fig . 4